# EUROPÄISCHE PATENTSCHRIFT

(11) **EP 1 053 958 B1**
(45) Veröffentlichungstag und Bekanntmachung des Hinweises auf die Patenterteilung: **17.11.2004**
(21) Anmeldenummer: 00109771.6
(22) Anmeldetag: 09.05.2000
(51) Int. Cl.: B65G 53/46

(54) **Zellenradschleuse mit exzentrisch einstellbarem Zellenradlager im Seitendeckel**
Cellular rotary valve with excentrically adjustable bearing in the side cover
Vanne à roue cellulaire avec palier de réglage excentrique dans le couvercle latéral

(30) Priorität: 20.05.1999 DE 19923142
(43) Veröffentlichungstag der Anmeldung: 22.11.2000
(73) Patentinhaber: MOTAN Materials Handling GmbH, 88250 Weingarten (DE)
(72) Erfinder: Heep, Dieter, 88368 Bergatreute (DE); Heep, Michael, 88250 Weingarten (DE)
(74) Vertreter: Riebling, Peter, Dr.-Ing.

(56) Entgegenhaltungen:
- DE-A- 4 033 011
- DE-C- 3 940 670

## Beschreibung

Die Erfindung betrifft eine Zellenradschleuse der im Oberbegriff des Anspruchs 1 angegebenen Art.

Bei Zellenradschleusen mit horizontal angeordnetem Zellenrad sind die Wellen grundsätzlich in den seitlich am Gehäuse angeordneten Seitendeckeln drehbar gelagert.

Der Abstand zwischen dem wenig verformbaren Zellenradkörper und dem Kugellager ist abhängig von der gewählten Wellenabdichtung, Simmering-, Gleitring- oder Stopfbuchsabdichtung und bestimmt die Durchbiegung der Zellenradwellenstummel, wenn Differenzdruck am Ein- oder Ausgang der Zellenradschleuse angelegt wird.

Zum Drehen des Zellenrades im Gehäuse ist ein Spalt notwendig, der sich aus folgenden Kriterien zusammensetzt:
- Lagerspiel
- Durchbiegung
- Fertigungstoleranz
- Temperatureinfluss
- notwendiger Sicherheitsabstand bei Eintritt aller Belastungsfälle

Geht man von einem Standardspalt von 0,10 - 0,25 mm je nach Zellenraddurchmesser aus, dann erkennt man die Schwierigkeiten bei der Fertigung von Zellenradschleusen für Dichtstromförderung, besonders bei einer sich abzeichnenden Entwicklung hin zu 6-bar Förderungen, die bisher den Druckgefässen vorbehalten blieb.

Einerseits soll die Lagerung so einfach wie möglich sein, andererseits muß sie die Anforderung steigender Belastungen erfüllen.

Verfahrenstechnisch führt die Veränderung der Lage des Zellenrades zur Drehachse im Gehäuse zu den charakteristischen Leckluftkurven unter steigendem Druck und es macht bei Einsatz einer seitlichen Abdichtung einen erheblichen Aufwand die Dichtung im Sinne einer wünschenswert hohen Lebensdauer von der Biegebewegung zu trennen.

In der DE 3940 670 C1 werden bei einer gattungsgemäßen Zellenradschleuse gewöhnliche Rollenlager zwischen der Gehäusebohrung und dem Zellenraddurchmesser angeordnet, um die Wellendurchbiegung komplett zu eliminieren. Das heißt zwischen der Seitenscheibe des Zellenrades und einer entsprechenden Ausnehmung in dem Gehäuse sind Lager zur radialen Abstützung des Zellenrades angeordnet, so dass das Zellenrad nicht mehr über die Achse abgestützt wird.

In der DE 4033 011 A1 werden die Lager auf einem Durchmesser größer als die Welle und kleiner als der Zellenraddurchmesser angeordnet, so daß damit der Stand der Technik vom kleinstmöglichsten Lagerdurchmesser (Welle) bis größtmöglichsten Lagerdurchmesser (Zellenrad) bekannt gemacht worden ist.

Leider nimmt bei zunehmender Lagergröße der gewöhnlichen Rollenlager die Lagerluft zu. Als Lagerluft oder Lagerspiel bezeichnet man die Bewegungsmöglichkeit von Außenring, Rolle oder Kugel und Innenring zueinander.

Erreicht die Lagerluft (siehe Katalogangaben) die Größenordnung des Spaltes zwischen Zellenraddurchmesser und Gehäuse, so ist der Sinn und die Wirkung der Konstruktionsausführung aufgehoben, da unter Förderdruck das radiale Ausweichen des Innenringes gegen Rolle oder Kugel und Außenring unter Herauspressen des Lagerspieles zum Berühren der Zellenbundstege am Gehäuse führt.

In der DE 198 04 431 A1 wird die Biegebewegung des Zellenrades auf einfachste Weise durch Anbringung einer seitlichen Stützrolle eliminiert. Leider begrenzt der Einbauplatz die Größe der Stützrolle und damit über die Belastungsgrenze und Lebensdauerberechnung die zulässige Förderdruckhöhe der Zellenradschleuse.

Der vorliegenden Erfindung liegt die Aufgabe zugrunde, auf einfachste Weise mit möglichst genormten Standardteilen der Kugellagerindustrie das Problem der Biegebewegung und das Lagerspiel von Zellenradschleusen mit seitlicher Abdichtung zu eliminieren.

Die Lösung der gestellten Aufgabe erfolgt durch die im Anspruch 1 gegebene technische Lehre. Wesentliches Merkmal der Erfindung ist, daß die Seitenscheibe der Zellenradschleuse und der Wälzlager-Außenring mit mindestens 3 Standardwälzlagern ein gemeinsames Großlager bilden, und die Wälzlager auf exzentrisch verstellbaren Achsen gelagert sind, wobei die Wälzlager am Umfang der Seitenscheibe des Zellenrades verteilt angeordnet sind, welche lastübertragend mit entsprechenden Wälzkörpern an dem Wälzlager-Außenring anliegen, der am Gehäuse befestigt ist.

Damit wird nun erstmals die Möglichkeit geschaffen, daß man das gesamte Zellenrad mit an den jeweiligen Seitenscheiben befestigten Wälzlager-Anordnungen an einem außenliegenden Ring (Wälzlager-Außenring) lagert, der selbst fest am Gehäuse befestigt ist.

Hierbei reicht es aus, lediglich drei derartiger Wälzlager gleichmässig am Umfang der Seitenscheibe zu verteilen.

Hier liegt der eigentliche Vorteil der Erfindung im Vergleich zum Stand der Technik, insbesondere der DE 39 40 670 C1, weil dort keine einstellbaren Lager angegeben sind. Dies führt dazu, daß eben wegen der vorhandenen Lagerluft das Zellenrad dazu neigt, am Gehäuse aufzulaufen, insbesondere dann, wenn entsprechende Belastungen durch zu förderndes Material entstehen.

Der während des Förderns entstehende Gasdruck verschiebt nämlich das gesamte Zellenrad und hier müssen entsprechende Vorkehrungen getroffen werden, daß das Zellenrad nicht im Gehäuse aufläuft. Derartige Vorkehrungen fehlten sowohl bei der DE 39 40 670 als auch bei der DE 40 33 011.

Hier setzt die Erfindung ein, die nun vorsieht, daß die genannten Wälzlager einstellbar ausgebildet sind, wobei die Einstellung bevorzugt über entsprechende Exzenter-Bolzen erfolgt.

Selbstverständlich ist die vorliegende Erfindung nicht darauf beschränkt, es können auch andere Einstellanordnungen verwendet werden, wie z.B. die Einstellung über konische Abdrückflächen, welche mit Hilfe von Kegelschrauben erreicht werden oder einfache Langlochverstellungen, welche gewährleisten, daß die jeweiligen Wälzlager radial verstellbar ausgebildet sind.

Der Begriff Wälzlager ist hierbei weit aufzufassen, es wird hierunter verstanden ein zylindrisches Rollenlager, ein Kugellager, ein Tonnenlager und selbstverständlich sind auch Gleitlager möglich und vorgesehen.

Bei der Verwendung von Gleitlagern muß für eine entsprechende Schmierung der Gleitflächen gesorgt werden, was durch entsprechende Schmierbohrungen und eine entsprechende Ölzufuhr leicht lösbar ist.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

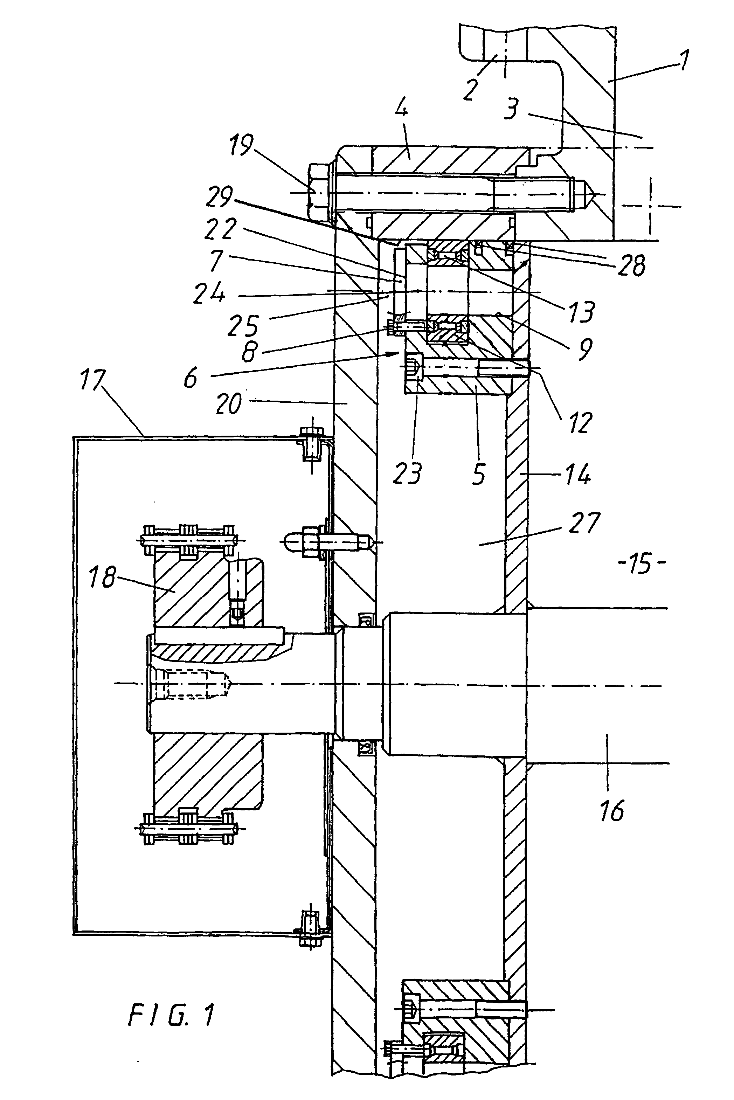

- Figur 1:: Vergrößerte Schnittansicht durch das Lager einer Zellenradschleuse nach der Erfindung
- Figur 2:: Schematisiert die Draufsicht auf die Lageranordnung nach Figur 1
- Figur 3:: Schematisiert die Funktion eines Wälzlagers in seiner Trageigenschaft am Außenring

Bezüglich der Funktion einer Zellenradschleuse wird auf den Offenbarungsgehalt der DE 39 40 670 C1 und der DE 40 33 011 A1 hingewiesen.

In einem Gehäuse 1, welches einen Zulaufschacht 3 für das zu fördernde Material aufweist, sind Flanschbohrungen 2 eingearbeitet, die an den Siloauslauf eines Fördergut-Silos angeschlossen werden.

Mittig ist eine Achse 16 angeordnet, welche Stegwände 15 eines Zellenrades trägt, welches nicht näher dargestellt ist.

Der Antrieb der Achse erfolgt über einen Kettenantrieb 18, der in einem axial außen liegenden Lagergehäuse 17 angeordnet ist.

Wichtig ist nun, daß drehfest mit der Achse die Seitenscheibe 14 des Zellenrades befestigt ist und daß auf dieser Seitenscheibe 14 am Umfang verteilt eine Mehrzahl von Wälzlagern 6 angeordnet sind, welche mit ihren lastübertragenden Oberflächen sich an dem Innenumfang eines Wälzlager-Außenringes 4 anlegen, welcher Außenring 4 mittels Schrauben 19 am Gehäuse 1 befestigt ist.

Die Wälzlageranordnung 6 wird nach außen hin durch einen Seitendeckel 20 abgedeckt.

Hierbei ist es bekannt, den Innenraum 27 zwischen der Seitenscheibe 14 des Zellenrades und dem feststehenden Seitendeckel 20 mit einem Sperrgas zu füllen, um ein Eindringen von Fördergut in die Wälzlager 6 zu vermeiden. Insbesondere werden durch diese Sperrluft auch die Dichtungen 28 geschützt, die sich ebenfalls an der lastübertragenden Innenfläche 29 des Außenrings 4 anlegen und dort abdichten.

Das Wälzlager 6 ist mit einem Wälzlager-Innenring 5 und mittels Schrauben 23 an der Seitenscheibe 14 befestigt. Im Innenring 5 ist ein Schlitz 22 eingearbeitet, in dem die lastübertragende Wälzkörperanordnung angeordnet ist.

Zur Lastübertragung liegt ein Außenring 12 an der lastübertragenden Innenfläche 29 des Außenringes 4 an, der auf zugeordneten Rollen 13 läuft, welche seitlich zwischen Standard-Kugellagerabdichtungen laufen.

Diese Rollen 13 wälzen sich auf einem Innenring 11 ab, der Teil dieses Wälzlagers 6 ist.

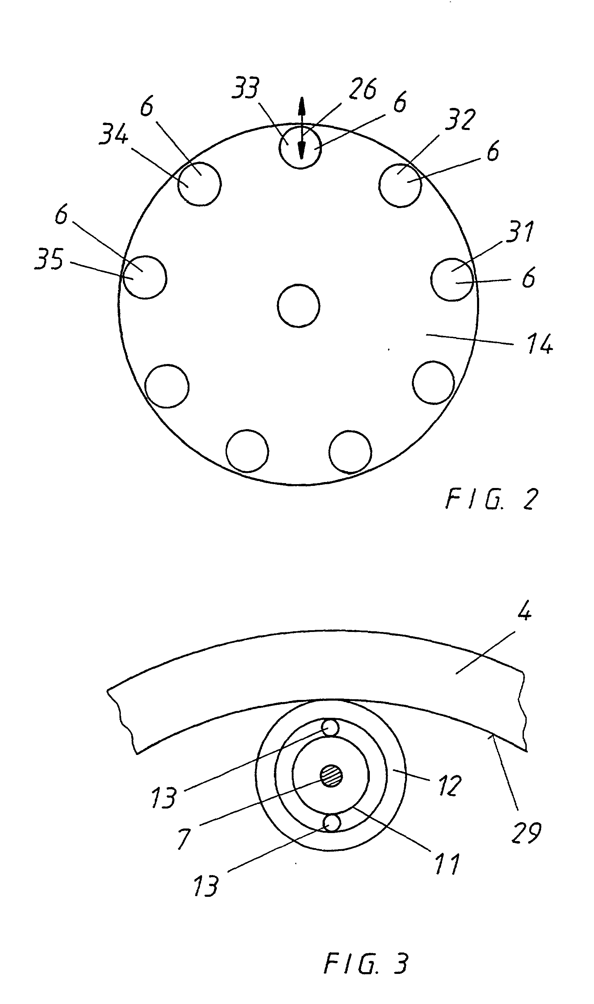

Wichtig ist, daß der Innenring 11 in radialer Richtung des Zellenrades (Verstellspiel 26 - siehe Figur 2) einstellbar und feststellbar ausgebildet ist. Hierzu ist ein Exzenter-Bolzen 7 der sich mit seiner zentrischen Stirnseite in einer Bohrung 9 und greift mit seinem Exzenterteil in den Innenring 11 ein, so daß mit der Verdrehung des Exzenter-Bolzens um die Drehachse 25, die zentrisch zu der Bohrung 9 liegt, eine Exzentrizität eingestellt wird und hierbei die Exzenter-Achse 24 radial einstellbar ist.

Die Feststellung der Verdrehung des Exzenter-Bolzens 7 erfolgt mittels ein oder mehrerer Feststellschrauben 8, welche den Exzenter-Bolzen 7 festlegen, sobald er fix eingestellt ist.

In Figur 2 ist dargestellt, daß eine Mehrzahl von Wälzlagern gleichmässig verteilt am Umfang der Seitenscheibe 14 des Zellenrades angeordnet sind und daß eben alle Wälzlager eine lastübertragende Oberfläche bilden, die sich an der lastübertragenden Innenfläche 29 des Außenringes 4 anlegt.

Es kann nun jedes Wälzlager 6 individuell in radialer Richtung (Verstellspiel 26) eingestellt werden, so daß also das gesamte Zellenrad unter Last während des Betriebes unter entsprechender Betriebstemperatur genau eingestellt werden kann.

In Figur 3 ist nochmals die Funktion eines derartigen Wälzlagers schematisiert dargestellt, wo erkennbar ist, daß die Rollen 13 radial übereinanderliegen und auf dem Innenring 11 sich abwälzen, währenddessen sie am Innenumfang des Außenringes 12 sich abwälzen und der Außenring seinerseits die lastübertragende Oberfläche zu der Innenfläche 29 des Außenringes 4 bildet.

Versuche haben nun gezeigt, daß die Wälzlager 6 unterschiedlich tragen.

Die Wälzlager bei Position 31 und 35 tragen eine relativ geringe Last im Vergleich zu den im Uhrzeigersinn gegen 12 Uhr gehenden weiteren Wälzlager bei Position 32 und 34, während das Wälzlager 33 die höchste Last aufzunehmen hat.

Nachdem sich das gesamte Zellenrad dreht, wird die Belastung im höchsten Punkt, d.h. bei Position 33 dauernd verlagert, so daß alle Wälzlager relativ gleichmässig belastet werden. Damit wird eine außerordentlich hohe Lebensdauer erzielt. Diese Konstruktion ermöglicht erstmals die Beibehaltung des notwendigen Spiels zwischen Zellenrad und Gehäuse unter Last der Zellenradschleuse, ohne daß die Gefahr besteht, daß das Zellenrad unter Last oder unter hohen Betriebstemperaturen auf dem Gehäuse aufläuft. Dies wird dadurch erreicht, daß eben die Wälzlager individuell einzeln einstellbar sind und daher eine entsprechende Einstellung unter Last und unter der gegebenen Betriebsbedingung erfolgen muß.

Im Ergebnis bildet der Innenring 5 in bezug zum Außenring 4 ein Großlager, welches nun erstmals mit den Wälzkörpern einstellbar ausgebildet ist und aus dem dementsprechend das Spiel herausgenommen ist, weil ja wegen der genauen Einstellbarkeit der einzelnen Wälzlager nun eine spielfreie Drehung ermöglicht wird.

Die Erfindung ist nicht darauf beschränkt, daß die Wälzlager radial in Richtung des Verstellspieles 26 ausgebildet sind, es kann auch eine Einstellung in senkrechte Richtung zum Verstellspiel 26 (in der Zeichenebene der Figur 2) vorgesehen werden. Es heißt also, die Lager könnten auch noch geringfügig am Umfang versetzt eingestellt werden.

### Zeichnungslegende

- 1.: Gehäuse
- 2.: Flanschbohrung
- 3.: Zulaufschacht
- 4.: Wälzlager-Außenring
- 5.: Wälzlager-Innenring
- 6.: Wälzlager
- 7.: Exzenter-Bolzen
- 8.: Feststellschraube
- 9.: Bohrung
- 10.: Abdichtung, innen
- 11.: Innenring
- 12.: Außenring
- 13.: Rolle
- 14.: Seitenscheibe (Zellenrad)
- 15.: Stegwand (Zellenrad)
- 16.: Achse
- 17.: Lagergehäuse
- 18.: Kettenantrieb
- 19.: Schraube
- 20.: Seitendeckel (Zellenrad)
- 21.: Ansatz (Innenring 5)
- 22.: Schlitz (im Innenring)
- 23.: Schraube
- 24.: Exzenter-Achse
- 25.: Drehachse
- 26.: Verstellspiel
- 27.: Innenraum
- 28.: Dichtungen
- 29.: Innenfläche
- 30.: Exzenterteil
- 31.: Position
- 32.: Position
- 33.: Position
- 34.: Position
- 35.: Position

## Patentansprüche

1. Zellenradschleuse bestehend aus Gehäuse (1), Wälzlager-Außenring (4), Zellenrad mit Seitenscheibe (14), Zellenradlager (6), und Seitendeckel (20), **dadurch gekennzeichnet, daß** die Seitenscheibe (14) und der Wälzlager-Außenring (4) mit mindestens 3 Standardwälzlagern (6) ein gemeinsames Großlager bilden, und die Wälzlager (6) auf exzentrisch verstellbaren Achsen (24, 25) gelagert sind, wobei die Wälzlager (6) am Umfang der Seitenscheibe (14) verteilt angeordnet sind, welche lastübertragend mit entsprechenden Wälzkörpern an dem am Gehäuse (1) befestigtem Wälzlager-Außenring (4) anliegen.

2. Zellenradschleuse nach Anspruch 1, **dadurch gekennzeichnet, daß** die Wälzlager (6) bevorzugt über Exzenter-Bolzen einstellbar ausgebildet sind.

3. Zellenradschleuse nach Anspruch 1 oder 2, **dadurch gekennzeichnet, daß** die Wälzlager (6) über konische Abdrückflächen, welche mit Hilfe von Kegelschrauben erreicht werden, einstellbar ausgebildet sind.

4. Zellenradschleuse nach Anspruch 1,2 oder 3, **dadurch gekennzeichnet, daß** die Wälzlager (6) über Langlochverstellungen einstellbar ausgebildet sind.

5. Zellenradschleuse nach einem der vorherigen Ansprüche, **dadurch gekennzeichnet, daß** die Wälzlager (6) radial verstellbar ausgebildet sind.

6. Zellenradschleuse nach einem der vorherigen Ansprüche, **dadurch gekennzeichnet, daß** die Wälzlageranordnung (6) nach außen hin durch den Seitendeckel (20) abgedeckt ist.

7. Zellenradschleuse nach einem der vorherigen Ansprüche, **dadurch gekennzeichnet, daß** das Wälzlager (6) mit einem Wälzlager-Innenring (5) und mittels Schrauben (23) an der Seitenscheibe (14) befestigt ist.

8. Zellenradschleuse nach Anspruch 7, **dadurch gekennzeichnet, daß** im Innenring (5) ein Schlitz (22) eingearbeitet ist, in dem die lastübertragende Wälzkörperanordnung angeordnet ist.

9. Zellenradschleuse nach einem der vorherigen Ansprüche, **dadurch gekennzeichnet, daß** ein Innenring (11) des Wälzlagers (6) in radialer Richtung des Zellenrades mit einem Verstellspiel (26) einstellbar und feststellbar ausgebildet ist und die Rollen (13) des Wälzlagers (6) radial übereinanderliegen und sich auf dem Innenring (11) abwälzen, währenddessen sie am Innenumfang eines Außenringes (12) des Wälzlagers (6) sich abwälzen und der Außenring (12) seinerseits die lastübertragende Oberfläche zu der Innenfläche (29) des Außenringes (4) bildet.

10. Zellenradschleuse nach Anspruch 9, **dadurch gekennzeichnet, daß** ein Exzenter-Bolzen (7) mit seiner zentrischen Stirnseite in einer Bohrung (9), und mit seinem Exzenterteil in den Innenring (11) eingreift, so daß mit der Verdrehung des Exzenter-Bolzens um die Drehachse (25), die zentrisch zu der Bohrung (9) liegt, eine Exzentrizität eingestellt wird und hierbei die Exzenter-Achse (24) radial einstellbar ist.

11. Zellenradschleuse nach Anspruch 10, **dadurch gekennzeichnet, daß** die Feststellung des Exzenter-Bolzens (7) mittels ein oder mehrerer Feststellschrauben (8) erfolgt, welche den Exzenter-Bolzen (7) festlegen, sobald er eingestellt ist.

## Claims

1. Rotary-vane feeder consisting of a casing (1), rolling bearing outer ring (4), vane wheel with side disc (14), vane wheel bearing (6), and side cover (20), **characterized in that** the side disc (14) and the rolling bearing outer ring (4) form with at least three standard rolling bearings (6) a common large bearing, and the rolling bearings (6) are mounted on eccentrically adjustable axes (24, 25), the rolling bearings (6) being distributed around the circumference of the side disc (14) and bearing in a load-transmitting manner by corresponding roller bodies on the rolling bearing outer ring (4) fixed to the casing (1).

2. Rotary-vane feeder according to Claim 1, **characterized in that** the rolling bearings (6) are configured so as to be adjustable, preferably by eccentric bolts.

3. Rotary-vane feeder according to Claim 1 or Claim 2, **characterized in that** the rolling bearings (6) are configured so as to be adjustable by conical push-off faces obtained by means of conical screws.

4. Rotary-vane feeder according to Claims 1, 2 or 3, **characterized in that** the rolling bearings (6) are configured so as to be adjustable by means of slots.

5. Rotary-vane feeder according to any one of the preceding claims, **characterized in that** the rolling bearings (6) are configured so as to be radially adjustable.

6. Rotary-vane feeder according to any one of the preceding claims, **characterized in that** the rolling bearing arrangement (6) is externally covered by the side cover (20).

7. Rotary-vane feeder according to any one of the preceding claims, **characterized in that** the rolling bearing (6) is mounted on the side disc (14) by a rolling bearing inner ring (5) and fixed by means of screws (23).

8. Rotary-vane feeder according to Claim 7, **characterized in that** a slot (22) is machined in the inner ring (5), in which the load-transmitting rolling bearing arrangement is arranged.

9. Rotary-vane feeder according to any one of the preceding claims, **characterized in that** an inner ring (11) of the rolling bearing (6) is configured so as to be adjustable and fixable in the radial direction of the vane wheel with adjustment play (26), and the rollers (13) of the rolling bearing (6) are radially superimposed on each other and roll on the inner ring (11) whilst also rolling on the inner circumference of an outer ring (12) of the rolling bearing (6), and the outer ring (12) forms in turn the load-transmitting surface to the inner face (29) of the outer ring (4).

10. Rotary-vane feeder according to Claim 9, **characterized in that** an eccentric bolt (7) engages in a bore (9) by its centric end and in the inner ring (11) by its eccentric part, so that upon rotation of the eccentric bolt about the axis (25) centred on the bore (9), an eccentricity is set, and the eccentric axis (24) is thus radially adjustable.

11. Rotary-vane feeder according to Claim 10, **characterized in that** the eccentric bolt (7) is fixed by means of one or more fixing screws (8) which immobilize the eccentric bolt (7) once it has been set.

## Revendications

1. Vanne à roue cellulaire composée d'un carter (1), d'une bague extérieure de palier à roulement (4), d'une roue cellulaire pourvue d'une plaque latérale (14), d'un palier de roue cellulaire (6) et d'un couvercle latéral (20), **caractérisée en ce que** la plaque latérale (14) et la bague extérieure de palier à roulement (4) forment avec au moins 3 paliers à roulement standard (6) un grand palier commun, et les paliers à roulement (6) sont montés sur des axes (24, 25) à réglage excentrique, lesdits paliers à roulement (16) étant répartis sur la circonférence de la plaque latérale (14), et appliqués avec des corps de roulement appropriés, en transmettant la charge, contre la bague extérieure de palier à roulement (4) fixée au carter (1).

2. Vanne à roue cellulaire selon la revendication 1, **caractérisée en ce que** les paliers à roulement (6) sont de préférence conçus pour être réglables grâce à des boulons d'excentrique.

3. Vanne à roue cellulaire selon la revendication 1 ou 2, **caractérisée en ce que** les paliers à roulement (6) sont conçus pour être réglables par l'intermédiaire de surfaces de pression coniques qui sont obtenues grâce à des vis coniques.

4. Vanne à roue cellulaire selon la revendication 1, 2 ou 3, **caractérisée en ce que** les paliers à roulement (6) sont conçus pour être réglables par l'intermédiaire d'ajustements dans des trous oblongs.

5. Vanne à roue cellulaire selon l'une des revendications précédentes, **caractérisée en ce que** les paliers à roulement (6) sont conçus pour être réglables radialement.

6. Vanne à roue cellulaire selon l'une des revendications précédentes, **caractérisée en ce que** le dispositif formant palier à roulement (6) est couvert, vers l'extérieur, par le couvercle latéral (20).

7. Vanne à roue cellulaire selon l'une des revendications précédentes, **caractérisée en ce que** le palier à roulement (6) est fixé avec une bague intérieure de palier à roulement (5) et à l'aide de vis (23) à la plaque latérale (14).

8. Vanne à roue cellulaire selon la revendication 7, **caractérisée en ce qu'**il est prévu dans la bague intérieure (5) une fente (22) dans laquelle est disposé le dispositif à corps de roulement qui transmet la charge.

9. Vanne à roue cellulaire selon l'une des revendications précédentes, **caractérisée en ce qu'**une bague intérieure (11) du palier à roulement (6) est conçue pour pouvoir être réglée et bloquée dans le sens radial de la roue cellulaire avec un jeu d'ajustement (26), et les rouleaux (13) du palier à roulement (6) sont superposés radialement et roulent sur la bague intérieure (11) tandis qu'ils roulent sur la circonférence intérieure d'une bague extérieure (12) du palier à roulement (6) et que ladite bague extérieure (12) forme elle-même la surface de transmission de charge vers la surface intérieure (29) de la bague extérieure (4).

10. Vanne à roue cellulaire selon la revendication 9, **caractérisée en ce qu'**un boulon d'excentrique (7) pénètre avec son côté frontal centré dans un perçage (9), et avec sa partie excentrique dans la bague intérieure (11), de sorte que lorsque le boulon d'excentrique tourne sur l'axe de rotation (25) qui est centré par rapport au perçage (9), une excentricité est réglée et l'axe d'excentrique (24) est réglable radialement.

11. Vanne à roue cellulaire selon la revendication 10, **caractérisée en ce que** le blocage du boulon d'excentrique (7) se fait à l'aide d'une ou plusieurs vis de blocage (8) qui bloquent le boulon (7) dès qu'il est réglé.
